# EUROPEAN PATENT SPECIFICATION

(11) **EP 2 545 736 B1**
(45) Date of publication and mention of the grant of the patent: **30.12.2020**
(21) Application number: 10847314.1
(22) Date of filing: 10.03.2010
(51) Int. Cl.: H04W 4/029, G01S 5/00, G01S 5/02, H04L 29/08, H04W 4/20, H04W 8/24, H04W 64/00

(54) **EXCHANGE OF MESSAGES RELATING TO POSITIONING DATA**
AUSTAUSCH VON NACHRICHTEN ÜBER POSITIONIERUNGSDATEN
ECHANGE DE MESSAGES EN RAPPORT AVEC DES DONNÉES DE POSITIONNEMENT

(43) Date of publication of application: 16.01.2013
(73) Proprietor: Nokia Technologies Oy, 02610 Espoo (FI)
(72) Inventor: WIROLA, Lauri, FIN-33580 Tampere (FI); LAINE, Tommi, FIN-Tampere 33560 (FI)
(74) Representative: Cohausz & Florack
(86) International application number: PCT/IB2010/051028
(87) International publication number: WO 2011/110899

(56) References cited:
- EP-A1- 1 557 685
- EP-A2- 1 307 021
- WO-A1-2010/022536
- WO-A2-2004/017646
- US-A1- 2008 085 724

## Description

### FIELD OF THE DISCLOSURE

The invention relates to the field of positioning of mobile devices and more specifically to the exchange of messages relating to positioning data.

### BACKGROUND

The position of a mobile device can be determined in various ways.

The position of a mobile device that comprises or is connected to a global navigation satellite system (GNSS) receiver could be determined for example based on measurements on satellite signals received at the mobile device. A mobile device could determine its position based on received satellite signals only, or based in addition on assistance data that is provided by a server. The latter approach is referred to as assisted GNSS (AGNSS). Assistance data may comprise for instance ephemerides, which represent satellite orbits and enable a mobile device to determine the position of satellites at a given time. Since ephemerides have a limited validity time, they have to be provided repeatedly. Exemplary GNSSs are the global positioning system (GPS), Galileo and GLONASS.

A wireless local area network (WLAN) enabled mobile device could evaluate signals that are received from WLAN access points (AP) instead for determining its position. WLAN-based positioning is suited for instance to complement GNSS-based positioning in urban environments. GNSS-based positioning methods frequently have problems in urban canyons, in which a mobile device may not be able to acquire signals from a sufficient number of satellites. At the same time, the density of WLAN access points in urban environments is usually high. WLAN-based positioning also enables indoor positioning, which allows for more effective location based services (LBS).

For WLAN-based positioning, the positions of the WLAN access points have to be known. They could be stored in a local database in a mobile device, or in a remote database at a server. If a mobile device stores data on WLAN access point for instance in a local cache, the position of the mobile device could be determined at the mobile device in a terminal-based mode, in which no network interaction is needed in the positioning process.

The database should contain at least information identifying the WLAN access points, for instance in the form of WLAN access point machine access code (MAC) addresses, and information on the locations of the WLAN access points, for instance in the form of their geographical coordinates. Typically, the database will also contain an estimate of the accuracy of the indicated location. For positioning, the mobile device may perform a scan for WLAN access points and compare the results of the scan to the records in the database. If corresponding records are found, the information is combined in a suitable manner to produce a position estimate for the mobile device. The combination could comprise for example a determination of a weighted average based on relative signal strength values.

Alternatively, the database could contain fingerprint records that include location information as well as information on the signal strength of the WLAN access points. The position of a mobile device may then be determined by comparing the fingerprints in the database, statistically or deterministically, to a measured fingerprint.

For a WLAN-based positioning, a mobile device is not required to have GNSS positioning capability or other positioning capability.

A database supporting WLAN-based positioning can be built in various ways. A company may buy hotspot directories from WLAN network providers and assimilate these directories in its database. Alternatively, mobile devices using the WLAN-based positioning service can perform the WLAN access point mapping themselves. The mobile devices may use to this end an (A)GPS-receiver attached to or inside the mobile devices. It is also very common that a database build-up is a community-based effort.

A further possibility of determining the position of a mobile device is a cell-based positioning. In this case, a mobile communication enabled device may evaluate the signals it receives from a serving cell and neighboring cells of a cellular communication network. Such a cellular communication network could be for instance a second generation (2G) network, like a global system for mobile communications (GSM) network, or a wideband code division multiple access (WCDMA) third generation (3G) network, like a Universal Mobile Telecommunications System (UMTS) network. Similar as with WLAN-based positioning, a cell-based positioning requires at least information on the identity of cells and information on the location of the cells.

Collecting the data for a WLAN-based positioning in a database could be combined with collecting the data for a cell-based positioning. WLAN-based positioning could then be combined with or complemented by cell-based positioning.

The data collected on WLAN access points and on the cells of a cellular communication system can be collected for example on servers and distributed to mobile devices for position determination. Such a database in a server may be called a "radiomap" or a "fingerprint database".

A global database for WLAN access points and cells can be huge in terms of data content. There are approximately 10 million GSM and WCDMA base stations and hundreds of millions WLAN access points. Thus, a mobile device may not be able to store the entire content of a database that is available at a server, but only information for selected areas. If another area is visited, additional information may thus have to be downloaded from the server.

Furthermore, the database is dynamic. Additional base stations and WLAN access points are installed constantly, while others are taken out of use again or removed completely. Also, depending on the algorithm for the database creation, the cell models may change rapidly in terms of size and shape as new measurement data is obtained. Hence, even if a mobile device has a local database available, it is useful to update this database occasionally.

Document EP 1 557 685 A1 presents an acquisition assist information managing method that enables a user equipment to perform positioning by acquiring a satellite with the use of acquisition assist information while reaching a desired numerical target related to positioning. The numerical target may include the acquisition time, the positioning time, a time needed to complete the positioning, and a volume of data communications. A test positioning is performed by repetitively acquiring a satellite with the use of combinations of respective items of information (time, initial location, ephemeris, almanac, ionospheric correction value, and/or a DGPS correction value). Evaluation information is generated by evaluating respective results of test positioning performed by acquiring the satellite with the use of combinations of respective items of information. A combination of respective items of information that can reach a numerical target from a user equipment is specified, and the user equipment is provided with acquisition assist information including the specified combination of respective items of information.

### SUMMARY OF SOME EMBODIMENTS OF THE INVENTION

The invention is defined by the appended claims.

For a first aspect of the invention, an embodiment of a method comprises generating a request for positioning data and including in the request an indication that an estimate of the amount of the requested positioning data is to be provided. The method further comprises causing a transmission of the request. The method further comprises receiving a response including an estimate of the amount of the requested positioning data. All actions may be performed by the same apparatus.

For the first aspect of the invention, an embodiment of an apparatus comprises means for realizing the operations of any embodiment of the method presented for the first aspect of the invention.

The means of this apparatus can be implemented in hardware and/or software. They may comprise for instance a processor for executing computer program code for realizing the required functions, a memory storing the program code, or both. Alternatively, they could comprise for instance a circuitry that is designed to realize the required functions, for instance implemented in a chipset or a chip, like an integrated circuit. Further alternatively, the means could be functional modules of a computer program code.

For the first aspect of the invention, another embodiment of an apparatus comprises at least one processor and at least one memory including computer program code, the at least one memory and the computer program code configured to cause the apparatus at least to perform the operations of any embodiment of the method presented for the first aspect of the invention.

For the first aspect of the invention, an embodiment of a computer readable storage medium stores computer program code. The computer program code causes an apparatus to perform the operations of any embodiment of the method presented for the first aspect of the invention when executed by a processor of the apparatus.

It is to be understood that also the computer program code by itself has to be considered an embodiment of the invention.

For a second aspect of the invention, an embodiment of a method comprises receiving a request for positioning data, the request including an indication that an estimate of the amount of the requested positioning data is to be provided. The method further comprises generating a response including an estimate of the amount of the requested positioning data. The method further comprises causing a transmission of the response. All actions may be performed by the same apparatus.

For the second aspect of the invention, an embodiment of an apparatus comprises means for realizing the operations of any embodiment of the method presented for the second aspect of the invention.

The means of this apparatus can be implemented in hardware and/or software. They may comprise for instance a processor for executing computer program code for realizing the required functions, a memory storing the program code, or both. Alternatively, they could comprise for instance circuitry that is designed to realize the required functions, for instance implemented in a chipset or a chip, like an integrated circuit. Further alternatively, the means could be functional modules of a computer program code.

For the second aspect of the invention, another embodiment of an apparatus comprises at least one processor and at least one memory including computer program code, the at least one memory and the computer program code configured to cause the apparatus at least to perform the operations of any embodiment of the method presented for the second aspect of the invention.

For the second aspect of the invention, an embodiment of a computer readable storage medium stores computer program code. The computer program code causes an apparatus to perform the operations of any embodiment of the method presented for the second aspect of the invention when executed by a processor of the apparatus.

It is to be understood that also the computer program code by itself has to be considered an embodiment of the invention.

In embodiments of both the first and the second aspect of the invention, the presented computer readable storage medium could be for example a disk or a memory or the like. The computer program code could be stored in the computer readable storage medium in the form of instructions encoding the computer-readable storage medium. The computer readable storage medium may be intended for taking part in the operation of a device, like an internal or external hard disk of a computer, or be intended for distribution of the program code, like an optical disc.

Finally, an embodiment of a system according to the invention may comprise any embodiment of an apparatus presented for the first aspect of the invention and any embodiment of an apparatus presented for the second aspect of the invention. Such a system may or may not include in addition a network connecting both apparatuses.

Thus, certain embodiments of the invention provide that an apparatus may request positioning data and indicate at the same time that instead of the requested positioning data only an estimate of the amount of the requested positioning data shall be sent. An apparatus receiving such a request may detect the indication and generate a response that contains only an estimate of the amount of the requested positioning data instead of the actual positioning data. It is to be understood that the term "only" in connection with the estimate does not mean that nothing else than the estimate can be transmitted; it rather means that the actual positioning data may be omitted.

Certain embodiments of the invention may have the effect that with the received estimate additional information is available at an apparatus before a request for the actual positioning data is transmitted. The estimate of the amount of data can be used for estimating the cost and/or the time of the data transfer beforehand. The estimate of the amount of data can further be used for estimating the amount of memory that is required for storing the data, and the required amount of memory can be compared with available amount of memory. The estimate of the amount of data can also be used to free an appropriate amount of memory, for instance by deleting the oldest stored positioning data or positioning data that has not been used for a while.

The additional information may be used for informing a user. Alternatively or in addition, it can be evaluated automatically in the apparatus based on predetermined conditions, for instance by checking whether some limit is exceeded. There could be for instance a setting that limits the amount of data that can be downloaded per day to a particular value. There may also be a setting that limits the number of objects that can be downloaded per request, etc. Such settings could be different for a home network and for roaming networks. In both cases, the additional information could be used for controlling the amount of data that is to be transferred.

Certain embodiments of the invention may have the effect that the same message structure can be used for requesting the estimate of an amount of positioning data as for requesting transmission of the actual positioning data. For example, in case the indication is a flag, the state of the flag may indicate whether positioning data or an estimate of the data amount should be provided. It is to be understood that instead of a flag a parameter could be used that allows further specifying the indication. For instance, it could specify how the estimated amount of data is to be indicated and whether it should be provided as a single value or broken down into several values, for instance for different types of positioning data.

The requested positioning data could be any data that may be useful in the positioning of a mobile device. It could comprise for instance data on WLAN access points for supporting a WLAN based positioning, data on cells or base stations of a cellular network, like a GSM, WCDMA, worldwide interoperability for microwave access (WiMax) or long term evolution (LTE) network, for supporting a cell based positioning, or data that can be used in an assisted satellite based positioning, like ephemerides for GPS, Galileo or GLONASS, etc.

The request for positioning data could be a request to download positioning data or a request to update positioning data. A download of positioning data may be triggered at an apparatus for instance directly after moving to a new area for which the apparatus does not have positioning data. It may be noted that also an apparatus having access to positioning data may be positioned by reporting the measurements to a positioning server, which returns the position estimate. An update of positioning data may be triggered at an apparatus for instance upon noting that a certain amount of time has passed since the last update.

In exemplary embodiments of the method, the apparatuses, the system, the computer program and the computer readable medium presented for the first aspect of the invention, the estimate of the amount of the requested positioning data is indicated in the response in terms of at least one of a data payload size and a number of individual objects.

The payload size can be further broken down into the payload size for different positioning data objects or groups of positioning data objects. The number of objects can be further broken down into separate numbers for each kind of object or for different groups of objects.

In an exemplary embodiment of the method presented for the first aspect of the invention, the estimate of the amount of the requested positioning data is indicated in the response in terms of a number of individual objects and the method further comprises estimating the payload data size for the indicated number of objects. In a corresponding embodiment of one of the apparatuses, which are presented for the first aspect, the program code and the processor, or some other means, are configured to realize a corresponding function. In a corresponding embodiment of the described computer program code and the described computer readable storage medium which are presented for the first aspect, the code may be defined to cause a corresponding action when executed.

If the apparatus receiving the estimate is able to estimate a payload size from an estimated number of objects, this has the effect that such estimation does not have to be performed at the apparatus providing the estimated number of objects. A payload size estimation may be computationally more challenging than simply extracting the number of objects from a database.

In an exemplary embodiment of the method presented for the first aspect of the invention, the method further comprises causing a presentation to a user of at least one of: the estimate of the amount of the requested positioning data; a processed estimate of the amount of the requested positioning data; an estimate of costs that would be caused by a download of data of the estimated amount; an estimate of a transmission time that would be required for a download of data of the estimated amount; an option to cancel the request; an option to accept the request; and an option to modify the request. In a corresponding embodiment of one of the apparatuses, which are presented for the first aspect, the program code and the processor, or some other means, are configured to realize a corresponding function. In a corresponding embodiment of the described computer program code and the described computer readable storage medium which are presented for the first aspect, the code may be defined to cause a corresponding action when executed.

A processed estimate of the amount of the requested positioning data could be for instance the payload size, in case the provided estimate is a number of objects.

The amount of available positioning data in a radio map can be huge, and also the amount of data that is available for an update may be significant. The amount of AGNSS assistance data may equally be significant when transferring for example predicted ephemeris data. Such predicted ephemeris data may include several sets of ephemerides for a given satellite so that the ephemerides are available for several days ahead. In addition, the situation is even more profound, if AGNSS assistance data is provided for multiple global navigation satellite systems. In the case of two global navigation satellite systems, for instance GPS and GLONASS, the amount of data to be transferred may double. Hence, some users may appreciate being notified before a download about the amount of data that shall be received and/or about the involved costs and/or the involved transfer time, as well as being enabled to influence the extent of the download based on concrete information.

In an exemplary embodiment of the method presented for the first aspect of the invention, the method comprises analyzing the estimate of the amount of the requested positioning data in the received response, and based on the analysis at least one of: aborting the request; accepting a selection of positioning data that has been requested in the request as a basis for a new request; modifying a selection of positioning data that has been requested in the request as a basis for a new request; and deleting data in a memory. In a corresponding embodiment of one of the apparatuses presented for the first aspect, the program code and the processor, or some other means, are configured to realize a corresponding function. In a corresponding embodiment of the computer program code and the computer readable storage medium presented for the first aspect, the code may be defined to cause a corresponding action when executed.

In an exemplary embodiment of the method presented for the first aspect of the invention, the method further comprises generating a new request for positioning data with an indication that the requested positioning data is to be provided, wherein the requested positioning data is selected based on at least one of a user input and an evaluation of the received estimate of the amount of the requested positioning data, and causing a transmission of the new request. In a corresponding embodiment of one of the apparatuses presented for the first aspect, the program code and the processor, or some other means, are configured to realize a corresponding function. In a corresponding embodiment of the computer program code and the computer readable storage medium presented for the first aspect, the code may be defined to cause a corresponding action when executed.

The new request could be a request for the same positioning data as before or a request for a modified composition of positioning data.

An evaluation of the received estimate may take into account a fixed criterion or a variable criterion. A fixed criterion may be set for instance by a user or an operator. A variable criterion could be the currently available memory space or a currently achievable transfer rate. The new request may be adapted for instance such that a desired cost limit is not exceeded and/or that an acceptable time required for the download is not exceeded and/or such that the delivered amount of data fits into the available free memory space. By considering the free memory space, it may be avoided that data is downloaded that would have to be discarded right away due to a lack of free memory space.

If the amount of data is provided as an individual value for different objects or groups of objects, for instance as individual payload size values or individual numbers of objects, this may have the effect that the selection of positioning data that is to be requested in the new request is facilitated. In this case, the positioning data may be selected quite accurately, for instance such that the maximum amount of positioning data is requested that can clearly be expected not to violate any limits. Any of the apparatuses presented for the first aspect of the invention may comprise only the indicated components or one or more additional component(s). Exemplary additional components comprise user interfaces, communication interfaces or global navigation satellite system receivers.

Any of the apparatuses presented for the first aspect of the invention may be an electronic device or a module or component for an electronic device. An electronic device could be for instance a mobile terminal, like a mobile phone or a laptop. A module could be for instance a chip, like an integrated circuit.

In exemplary embodiments of the method, the apparatuses, the system, the computer program and the computer readable medium presented for the second aspect of the invention, the estimate of the amount of the requested positioning data is indicated in terms of at least one of a data payload size and a number of individual objects.

In an exemplary embodiment of the method presented for the second aspect, the method further comprises obtaining the estimated amount of the requested positioning data by at least one of assembling the requested positioning data and determining the amount of the assembled positioning data; querying objects belonging to the requested positioning data from a database and calculating the number of individual objects; retrieving a stored estimate of a data payload size of the requested positioning data; and retrieving at least one stored count of objects belonging to the requested positioning data. In a corresponding embodiment of one of the apparatuses presented for the second aspect, the program code and the processor, or some other means, are configured to realize a corresponding function. In a corresponding embodiment of the computer program code and the computer readable storage medium presented for the second aspect, the code may be defined to cause a corresponding action when executed.

When the estimate is computed based on assembled positioning data, there is no need to store additional information on the amount of positioning data. When the estimate is stored either in the form of a payload size or in the form of a count of objects, however, this may save significant processing time required for assembling the positioning data and for computing the estimate.

Any of the apparatuses presented for the second aspect of the invention may comprise only the indicated components or one or more additional component(s). Exemplary additional components comprise communication interfaces and a memory storing a database with positioning data.

Any of the apparatuses presented for the second aspect of the invention may be an electronic device or a module or component for an electronic device. An electronic device could be for instance a network server or a server that is configured to be connected to a network. A module could be for instance a chip, like an integrated circuit.

In certain embodiments, the methods presented for the first or second aspect are information providing methods, and the apparatuses presented for the first or second aspect are information providing apparatuses. In certain embodiments, the means of some of the presented apparatuses are processing means.

In certain embodiments of the methods presented for the first or second aspect, the methods are methods for exchanging messages relating to positioning data. In certain embodiments of the apparatuses presented for the first or second aspect, the apparatuses are apparatuses for exchanging messages relating to positioning data.

It is to be understood that any feature presented for a particular exemplary embodiment may also be used in combination with any other described exemplary embodiment of any category.

Further, it is to be understood that the presentation of the invention in this section is merely exemplary and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of an exemplary embodiment of an apparatus according to the first aspect of the invention;
- Fig. 2: is a flow chart illustrating an exemplary operation in the apparatus of Figure 1;
- Fig. 3: is a schematic block diagram of an exemplary embodiment of an apparatus according to the second aspect of the invention;
- Fig. 4: is a flow chart illustrating an exemplary operation in the apparatus of Figure 3;
- Fig. 5: is a schematic block diagram of an exemplary embodiment of a system according to the invention;
- Fig. 6: is a flow chart illustrating an exemplary operation in the system of Figure 5; and
- Fig. 7: is a table illustrating exemplary parameters that may be used in the operation illustrated in Figure 6.

### DETAILED DESCRIPTION OF THE FIGURES

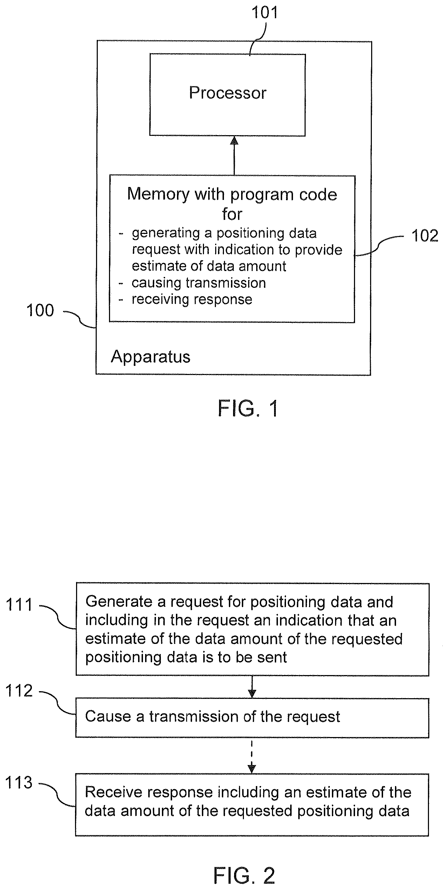

Figure 1 is a schematic block diagram of an exemplary embodiment of an apparatus according to the first aspect of the invention.

In this embodiment, an apparatus 100 comprises a processor 101 and a memory 102. Memory 102 stores computer program code for generating a positioning data request, for causing a transmission of the request and for receiving a response. Processor 101 is configured to execute computer program code stored in memory 102 in order to cause the apparatus to perform desired actions.

An operation of apparatus 100 will now be described with reference to the flow chart of Figure 2. The operation is an exemplary embodiment of a method according to the first aspect of the invention. Processor 101 and the program code stored in memory 102 cause apparatus 100 to perform the operation when the program code is retrieved from memory 102 and executed by processor 101.

Processor 101 generates a request for positioning data. The request includes an indication that an estimate of the amount of the requested positioning data is to be transmitted (action 111).

Processor 101 then causes a transmission of the request (action 112).

Processor 101 receives a response including an estimate of the amount of the requested positioning data (action 113) .

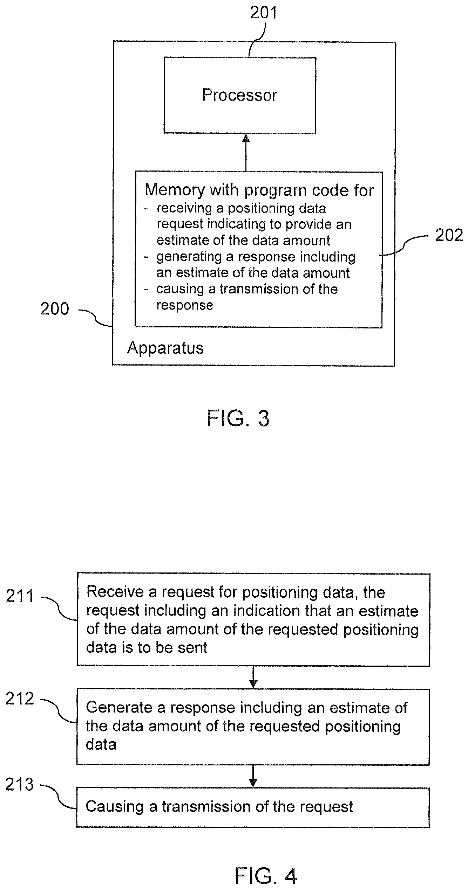

Figure 3 is a schematic block diagram of an exemplary embodiment of an apparatus according to the second aspect of the invention.

In this embodiment, an apparatus 200 comprises a processor 201 and a memory 202. Memory 202 stores computer program code for receiving a positioning data request, for generating a positioning data response, and for causing a transmission of the response. Processor 201 is configured to execute computer program code stored in memory 202 in order to cause the apparatus to perform desired actions.

An operation of apparatus 200 will now be described with reference to the flow chart of Figure 4. The operation is an exemplary embodiment of a method according to the second aspect of the invention. Processor 201 and the program code stored in memory 202 cause apparatus 200 to perform the operation when the program code is retrieved from memory 202 and executed by processor 201.

Processor 201 receives a request for positioning data (action 211). The request includes an indication that an estimate of the amount of the requested positioning data is to be provided.

Processor 101 generates in reaction to the request a response including an estimate of the amount of the requested positioning data (action 212).

Processor 101 then causes a transmission of the response (action 213).

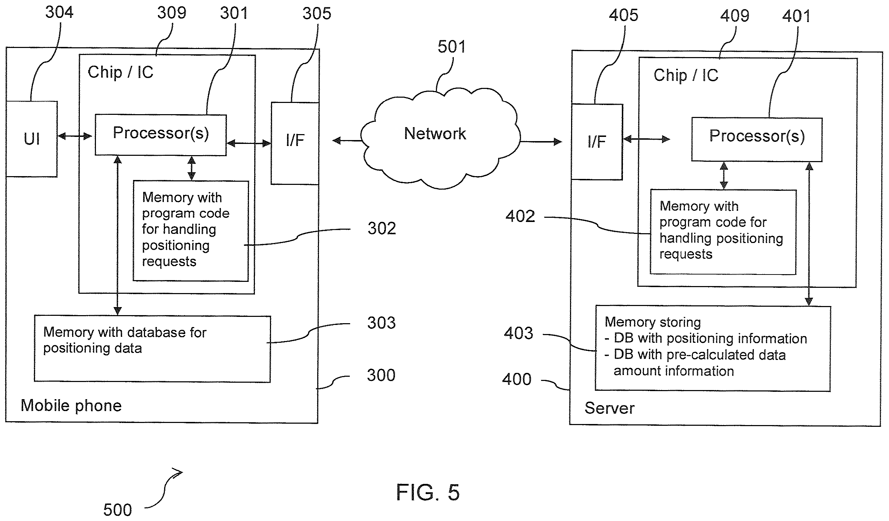

Figure 5 is a schematic block diagram of an exemplary system comprising an exemplary embodiment of an apparatus according to the first aspect of the invention and an exemplary embodiment of an apparatus according to the second aspect of the invention.

System 500 comprises a mobile phone 300, a server 400 and a communication network 501 interconnecting mobile phone 300 and server 400. Server 400 could also belong to communication network 501.

Mobile phone 300 comprises a processor 301. Processor 301 is linked to a first memory 302, to a second memory 303, to a user interface 304 and to a plurality of radio interfaces 305.

Processor 301 is configured to execute computer program code, including computer program code stored in memory 302, in order to cause mobile phone 300 to perform desired actions.

Memory 302 stores computer program code for handling positioning requests. The computer program code may comprise for example similar program code as memory 102. The program code could belong for instance to a comprehensive positioning application stored in memory 302. In addition, memory 302 may store computer program code implemented to realize other functions, as well as any kind of other data.

Processor 301 and memory 302 may optionally belong to a chip or an integrated circuit 309, which may comprise in addition various other components, for instance a further processor or memory or a part of interfaces 305, etc.

Memory 303 stores a database which can be accessed by processor 301. The database comprises positioning data. The positioning data may include for example WLAN access point identifiers for several WLAN access points, geographical coordinates for each WLAN access point and an indication of the accuracy of the coordinates, cell identifiers for several cells of a cellular communication network, location information for each cell and information on the coverage of each cell, etc. The cells could comprise 2G and/or 3G cells, like GSM cells and WCDMA cells, but equally LTE and/or WiMax cells. The database can be considered to be a radio map or fingerprint database. In addition, the database may store data of a static grid. A static grid may consist of regions, which are also referred to as grid objects. The static grid makes it straightforward to do area-based searches for the radiomap objects from the database. In addition, the database may store sets of ephemerides for various satellites of one or more global navigation satellite system. Memory 303 may be for example an integrated memory of mobile phone 300, like a local cache, or an exchangeable memory card.

User interface 304 comprises components enabling a user input and components for providing an output to a user. User interface 304 may comprise for instance a keyboard, a display, a touchscreen, a microphone, speakers, etc.

Radio interfaces 305 may comprise a communication interface, which enables mobile phone 300 to communicate with other devices, like server 400, via communication network 501. The communication interface could comprise for instance a transceiver enabling an access to a cellular communication network, like a GSM or UMTS network. In addition, radio interfaces 305 may comprise a WLAN interface. The WLAN interface could comprise for instance a transceiver enabling an access to WLANs. In addition, radio interfaces 305 may comprise a global navigation satellite system receiver, for example a GPS receiver and/or Galileo receiver.

Component 309 or mobile phone 300 could correspond to an exemplary embodiment of an apparatus according to the first aspect of the invention.

Instead of a mobile phone, device 300 could also be any other kind of mobile device which is able to communicate with a device offering positioning data, for instance a laptop.

Server 400 may comprise a processor 401 that is linked to a first memory 402, a second memory 403 and an interface 405.

Processor 401 is configured to execute computer program code, including computer program code stored in memory 402, in order to cause server 400 to perform desired actions.

Memory 402 stores computer program code for handling positioning requests by mobile devices. The computer program code may comprise for example similar program code as memory 202. The program code could belong for instance to a comprehensive application supporting a positioning of mobile devices. In addition, memory 402 may store computer program code implemented to realize other functions, as well as any kind of other data.

Processor 401 and memory 402 may optionally belong to a chip or an integrated circuit 409, which may comprise in addition various other components, for instance a further processor or memory.

Memory 403 stores a database that can be accessed by processor 401. The database comprises positioning data that can be used by a mobile device in a positioning procedure. It can be for instance a radio map or fingerprint database. The stored information can be similar to the information on WLAN access points and cells in database in memory 303. The information in memory 403 is more comprehensive and generally more up-to-date, though. The cells could comprise again 2G and/or 3G cells, like GSM cells and WCDMA cells, but equally LTE and/or WiMax cells. In addition, memory 403 could store positioning data supporting a satellite based positioning, for example sets of predicted ephemerides for all satellites of at least one global navigation satellite system, like GPS or Galileo, which may be valid for several days ahead. Optionally, memory 403 could comprise as well a database with information on precalculated amounts of data.

Interface 405 is a component which enables server 400 to communicate with other devices, like mobile phone 300, via network 501. Interface 405 could comprise for instance a TCP/IP socket.

Component 409 or server 400 could correspond to an exemplary embodiment of an apparatus according to the second aspect of the invention.

Network 501 could also represent a combination of several interlinked networks, for instance at least one mobile communication network and the Internet. Mobile phone 300 could then access the mobile communication network and server 400 via the Internet.

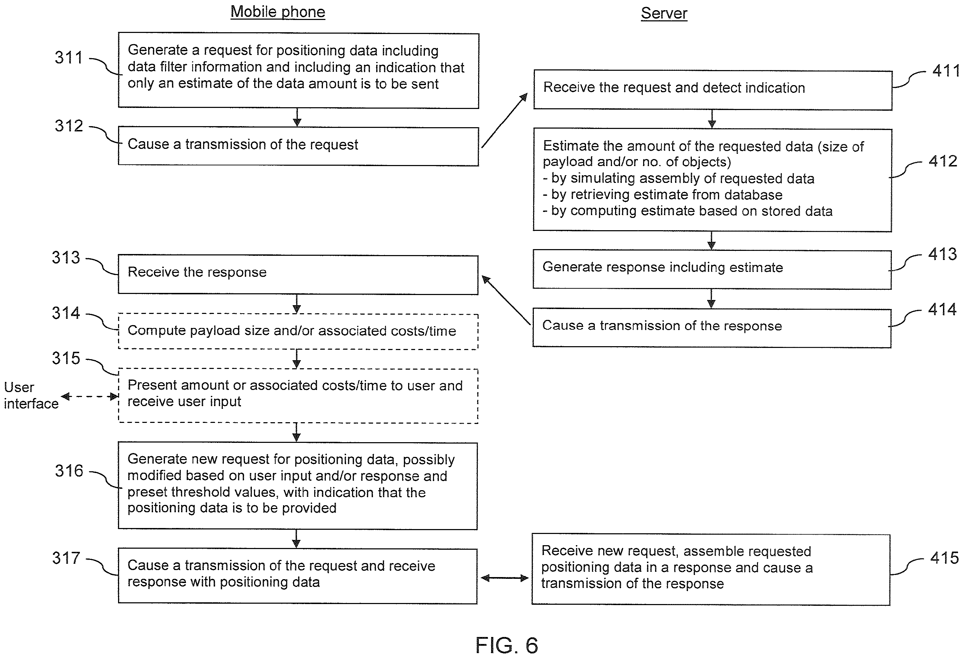

An operation in system 500 of Figure 5 will now be described with reference to the flow chart of Figure 6.

Operations at mobile phone 300 are presented on the left hand side of Figure 6. Processor 301 and the program code stored in memory 302 cause mobile phone 300 to perform the operations when the program code is retrieved from memory 302 and executed by processor 301. Operations at server 400 are presented on the right hand side of Figure 6. Processor 401 and the program code stored in memory 402 cause server 400 to perform the operations when the program code is retrieved from memory 402 and executed by processor 401.

Mobile phone 300 may decide that an update of the positioning data in database 303 would be appropriate. The decision could be based on any suitable criterion. For example, a user may initiate the update via user interface 304. Alternatively, mobile phone 300 may comprise settings which cause an update at regular intervals, for example day-to-day, or whenever entering a region for which no data has been available so far. Further alternatively, the update could be considered appropriate after a positioning attempt based on the available positioning data has failed. Further alternatively, the update could be considered appropriate whenever signals are received from WLAN access points or cells for which no data is available. Further alternatively, requesting positioning data for a satellite based positioning may be considered appropriate whenever a satellite based positioning is activated, and thereafter at regular intervals. In case the update is initiated by mobile phone 300, the update could be started automatically or after confirmation by a user.

For starting the update, mobile phone 300 generates a request for positioning data (action 311). The request includes details on the data that is to be delivered. The request could be for instance an object based query and indicate specific objects in a radio map for which data is desired. Alternatively, the request could be for instance an area based query, which defines a geographical area. In this case, data on all objects which fall within the area is desired. The area could be defined for instance by longitude and latitude of an upper left corner and longitude and latitude of a lower right corner of a rectangle. Any other polygon structure could be used as well. Alternatively, a static grid could be defined. In this case, an identifier of one or more regions delimited by the grid could be indicated to specify an area for which data is desired. The static grid could be pre-programmed and stored for example in memory 303. Further alternatively, the definition of the area might rely on a cellular network hierarchy; in this case an area could be defined for instance by indicating one or more location area codes (LAC). It may be noted that positioning data will generally not be distributed evenly. In urban areas for instance, the density of WLAN access points is higher than in rural areas. Thus, the mobile phone 300 cannot estimate how much data there is for a given area simply based on the size of the area. Both an object query and an area based query could be further refined, for example by including or excluding particular objects, by including or excluding objects matching with a given attribute value, by using a version filtering to obtain only data on objects that have changed since the last request, etc.

An exemplary request could thus indicate in the request details that mobile phone 300 wishes to receive positioning data for all 2G and 3G cells belonging to the home network of mobile phone 300 and for all WLAN access points, both in a particular region in a static grid. Mobile phone 300 adds to this request an indication that an estimate of the data amount of the requested data is to be provided instead of the actual data. This indication could be provided for instance in the form of a flag in the request. The request could have the following structure:

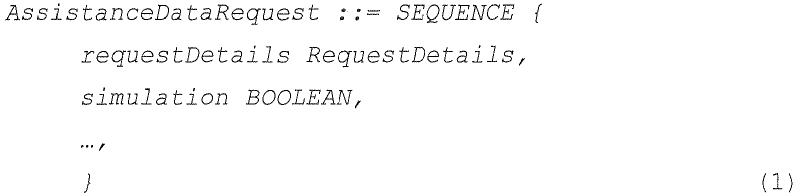

In this structure, the *"requestDetails"* could specify the desired positioning data, and a value of "TRUE" of the flag *"simulation"* could indicate that only an estimate of an amount of this data is to be provided.

Mobile phone 300 then causes a transmission of the generated request via the communication interface of interfaces 305 (action 312).

Server 400 receives the request via network 501 and detects the included indication to provide only an estimate of the amount of the requested positioning data (action 411).

Server 400 estimates thereupon the amount of the requested positioning data (action 412). This may include estimating the size of the payload and/or estimating the number of individual objects.

Server 400 could estimate the amount by assembling the requested positioning data as for transmission, and then determining the obtained amount of data or by querying objects belonging to the requested positioning data from a database and then calculating the number of individual objects. Alternatively, if database 403 comprises precalculated amounts of data, either in the form of payload size or of object counts, server 400 could estimate the amount by performing a database query to retrieve the stored amount. For example, in case the database management is based on a static grid, each grid object may include the associated object counts or payload sizes. This has the effect that the object counts and payload size do not have to be re-calculated for each simulated request but only retrieved from database 403, which may reduce the processing burden at server 400 significantly. If only the object counts are stored and server 400 shall provide the size of the payload, an estimate of the payload size may be computed based on the stored object counts.

Server 400 then generates a response including the estimate of the payload size or of the number of objects (action 413). The structure of the response could be as follows:

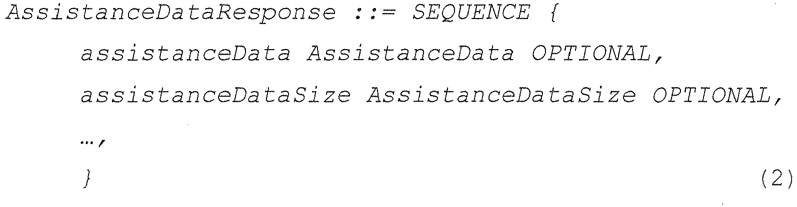

The response is thus defined to be able to provide either positioning data as *"assistanceData"* or the estimated amount of requested positioning data as *"assistanceDataSize"* or both. For the response generated in action 413, the positioning data is not included, but only the estimated amount of positioning data.

The amount of data *"AssistanceDataSize"* could be further broken down into details. The details could be provided for example with the following structure:

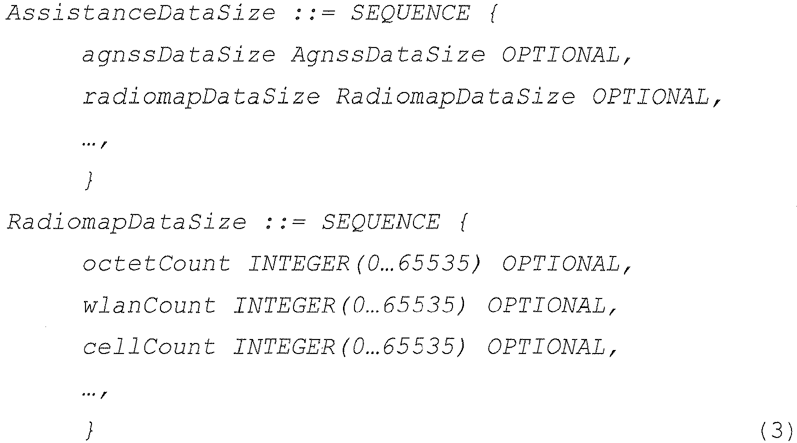

The above structure (3) thus allows providing separate estimates of data amounts for AGNSS assistance data and radio map data, etc. In addition, it allows further splitting up the estimate of data amount for the radio map related data, by providing separate estimates for an octet count, a WLAN count and a cell count, etc. The *"octetCount"* could indicate the estimated total payload size that would be transferred for the radio map data, represented by the number of octets. The *"wlanCount"* could indicate the number of WLAN access points for which positioning data would be transferred. The *"cellCount"* could indicate the number of cells for which positioning data would be transferred.

WLAN access point count and cell count enable mobile phone 300 to estimate the payload size that would be transferred, if the payload size is not included. For server 400, this has the effect that there is no need to encode the payload in the server 400 just to generate the octet count. This saves computational resources in server 400.

The object counts in structure (3) may be further broken down, for example to differentiate the amount of data for different operators and different types of air interfaces, like GSM, WCDMA, LTE and WiMax, etc.

It is to be understood that also the octet count could be provided on a finer scale, to facilitate a subsequent deselecting at mobile phone 300, which will be described further below.

Instead of the abstract syntax notation one (ASN.1) coding used for defining structures (1) to (3), any other suitable implementation may be selected, for instance depending on the coding used in the positioning protocol.

Server 400 causes a transmission of the generated response to mobile phone 300 via network 501 (action 414)

Mobile phone 300 receives the response (action 313).

In case the response contains only object counts but no payload size, mobile phone 300 may compute an estimate of the payload size based on the object counts. The estimate could be computed separately for each object count or as a total value for all object counts. In addition, the mobile phone 300 could compute the costs that a transfer of the data with the provided or computed estimated payload size to mobile phone 300 would cause and/or the transfer time it would take (action 314).

Mobile phone 300 may further present the object counts, the payload size, the costs and/or the transfer time to a user via user interface 304 (action 315). Additional information could be presented as well, for instance the currently available memory space in memory 303. Mobile phone 300 could request the user to confirm that the positioning data should now be downloaded or to decide on a limitation of the originally requested positioning data. In case the user aborts the procedure, no further action is taken by mobile phone 300.

Alternatively, the response from server 400 could be evaluated automatically by mobile phone 300. If the payload size or the number of objects exceeds a predetermined value and/or the currently available memory space, the originally requested positioning data could for example be limited based on predetermined criteria or the process could be aborted.

Further alternatively, the decision making could also be shared. For example, the user could be responsible for deciding on whether or not to accept the costs on a case-by-case basis, while mobile phone 300 checks the available memory space autonomously. The decision could be in both cases simply to proceed or not to proceed. Alternatively, it could comprise a limitation of the requested positioning data.

Unless the process is aborted in view of the obtained information by the user or by mobile phone 300, mobile phone 300 then generates a new, possibly modified request for positioning data, this time with an indication that the actual positioning data is to be provided (action 316). The positioning data that is requested with the new request is selected based on a user input in response to presented information and/or on results of an evaluation of the received estimate of the amount of data.

For the request, the above indicated structure (1) could be used again. In this case, a value of "FALSE" of the flag *"simulation"* could indicate that the real results to the query are desired.

Mobile phone 300 causes a transmission of the new request to server 400 (action 317).

Server 400 receives the new request, detects the indication that now the real positioning data is to be sent, assembles the requested positioning data, includes them in a response, and causes a transmission of the response to mobile phone 300 (action 415). For the response, the above indicated structure (2) could be used again, this time using the item *"assistanceData"* instead of the item *"assistanceDataSize".*

Mobile phone 300 receives the response with the positioning data (action 317) and stores the data in memory 303. The stored data may then be used right away or at a later point of time for determining the current position of mobile phone 300, for instance in the scope of a location based service.

It has to be noted that irrespective of whether positioning data is downloaded or not, mobile phone 300 may store the object count and/or payload size estimates in memory 303 for later use. Thus, even if the positioning data is not downloaded right away, the estimate on the amount of data is still available for the case that a need to download data for example for the same area arises at a later point of time. Then the estimate does not have to be queried again from server 400. Instead, mobile phone 300 may potentially directly proceed with downloading the positioning data or a reduced version of the positioning data.

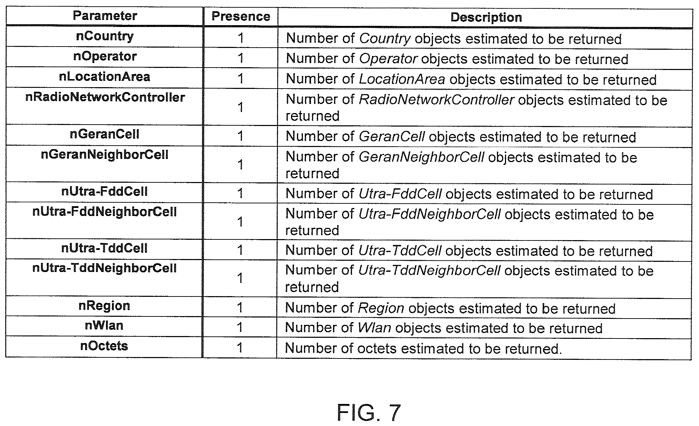

Some details of another exemplary embodiment will be described with reference to Figure 7 in terms of a protocol.

A server may comprise or have access to a radio map. The radio map may contain models for GSM enhanced data rates for GSM evolution (EDGE) Radio Access Network (GERAN), UMTS terrestrial radio access (UTRA) and WLAN networks and can be used for cell or WLAN based positioning purposes. The models may be models of base station coverage areas, of base station coordinates, etc. The models may be available in the form of separate radio map objects, for instance of objects with data for a respective country, operator, location area, radio network controller, GERAN cell, GERAN neighbor cell, UTRA frequency division duplex (FDD) cell, UTRA-FDD neighbor cell, UTRA time division duplex (TDD) cell, UTRA-TDD neighbor cell, region and/or WLAN, etc. The server may create the radio map by processing fingerprint records observed from a network. Clients may query the radio map data in line with a location protocol and the server may respond to the query in line with the location protocol. The queried data may be stored locally by the clients for positioning purposes.

The objects can be considered to be arranged in an object tree such that the relation between the objects may be exploited for encoding location information in a way minimizing the data that has to be transferred. For example, a GERAN cell is located in a particular location area that is covered by a particular operator in a particular country.

The location protocol may define a radio map message, which consists of header and content parts. The content may be a variable length part containing the radio map message payload. The content can be a radio map request, a radio map response or a radio map error message. The radio map request may be intended for transmission from a client to a server, while the radio map response and the radio map error message may be intended for transmission from a server to a client.

The radio map request may contain a radio map query, either in the form of a name of a radio map object defining a starting point in a radio map object tree for an object based query, or in the form of an area with coordinates defining a rectangle for an area based query. The request may further contain data refining the query. The request may further contains a flag *"simulate",* which indicates whether a client wants to have the real results to a query (*simulate* = false) or just the number of different object types that the query would result to (*simulate* = true). It may further contain various pieces of additional information.

The radio map response may contain the response to a radio map query as a radio map object collection or as an object count in the case of a simulated query. It may further contain various pieces of additional information.

Possible parameters for the object count in the response are presented in the table of Figure 7.

A parameter *"nCountry"* represents the number of country objects that are estimated to be returned. A parameter *"nOperator"* represents the number of operator objects that are estimated to be returned. A parameter *"nLocationArea"* represents the number of Location area objects that are estimated to be returned. A parameter *"nRadioNetworkController"* represents the number of radio network controller objects that are estimated to be returned. A parameter *"nGeranCell"* represents the number of GERAN cell objects that are estimated to be returned. A parameter *"nGeranNeighborCell"* represents the number of GERAN neighbor cell objects that are estimated to be returned. A parameter *"nUtra-FddCell"* represents the number of UTRA-FDD cell objects that are estimated to be returned. A parameter *"nUtra-FddNeighborCell"* represents the number of UTRA-FDD neighbor cell objects that are estimated to be returned. A parameter *"nUtra-TddCell"* represents the number of UTRA-TDD cell objects that are estimated to be returned. A parameter *"nUtra-TddNeighbor-Cell"* represents the number of UTRA-TDD neighbor cell objects that are estimated to be returned. A parameter *"nRegion"* represents the number of region objects that are estimated to be returned. A parameter *"nWlan"* represents the number of WLAN objects that are estimated to be returned. Finally, a parameter *"nOctets"* represents the number of octets that are estimated to be returned for all of the queried objects.

The table in Figure 7 comprises a column labeled "presence", which indicates how many instances of a parameter can be provided. The value of "presence" is indicated to be "1" for all parameters. This means that there will be exactly one instance of each parameter in an information element represented by the table in Figure 7. For example, there will be exactly one *"nCountry"* parameter in the information element. However, in case the assistance data request was only for GERAN, for example, then obviously the number of UTRA-FDD/UTRA-TDD cells that would be returned would be zero.

It is to be understood that the parameters could be varied in many ways by omitting, adding or modifying parameters.

For example, it would be possible as well to provide numbers of GSM related objects instead of numbers of GERAN related objects. Further, it would be possible to provide numbers for WCDMA related objects instead of numbers for UTRA-FDD and numbers for time division synchronous code division multiple access (TD-SCDMA) related objects instead of UTRA-TDD related objects.

Moreover, the radio map could also comprise objects of any other radio network, like WiMax or LTE networks. In this case, the table of Figure 7 could be extended to comprise parameters for the numbers of objects related to such additional or alternative objects as well.

The presented protocol could be used for example by mobile phone 300 of Figure 5 as a client and by server 400 of Figure 5 as a server. To this end, the program code in memories 302 and 402 could be designed in line with the presented location protocol.

The presented embodiments may thus have the effect of improving the database management of a mobile device, of reducing and/or controlling the costs for a user of the mobile device and of improving the user experience.

Figures 2, 4 and 6 may also be understood to represent exemplary functional blocks of computer program code for handling simulated requests for positioning data.

The processor(s) used in any of the above described embodiments could also be used for additional operations.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a mobile phone, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Any of the memories mentioned in this text could be implemented as a single memory or as a combination of a plurality of distinct memories, and may comprise for example a read-only memory, a random access memory, a flash memory or a hard disc drive memory etc.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The functions illustrated by the processor 101 in combination with the memory 102, by the processor 301 in combination with the memory 302 or by component 309 can be viewed as means for generating a request for positioning data and including in the request an indication that only an estimate of the amount of the requested positioning data is to be provided; means for causing a transmission of the request; and means for receiving a response including an estimate of the amount of the requested positioning data.

The program codes in memory 102 or memory 302 can also be viewed as comprising such means in the form of functional modules.

The functions illustrated by the processor 201 in combination with the memory 202, by the processor 401 in combination with the memory 402 or by component 409 can be viewed as means for receiving a request for positioning data, the request including an indication that only an estimate of the amount of the requested positioning data is to be provided; means for generating a response including an estimate of the amount of the requested positioning data; and means for causing a transmission of the response.

The program codes in memory 202 or memory 402 can also be viewed as comprising such means in the form of functional modules.

It will be understood that all presented embodiments are only exemplary, that features of these embodiments may be omitted or replaced and that other features may be added.

Any mentioned element and any mentioned method step can be used in any combination with all other mentioned elements and all other mentioned method step, respectively. It is the intention, therefore, to be limited only as indicated by the scope of the claims appended hereto.

## Claims

1. An apparatus comprising at least one processor and at least one memory including computer program code; the at least one memory and the computer program code configured to cause the apparatus at least to perform:
generating a request for positioning data and including in the request an indication that an estimate of an amount of the requested positioning data is to be provided instead of the requested positioning data (311), wherein the indication is in the form of a flag in the request;
causing a transmission of the request (312); and
receiving a response including an estimate of the amount of the requested positioning data instead of the requested positioning data (313);
wherein the positioning data comprises at least one of:
data on wireless local area network, WLAN, access points for supporting a WLAN based positioning; or
data on cells or base stations of a cellular network for supporting a cell based positioning.

2. The apparatus according to claim 1, wherein the cellular network is at least one of:
a global system for mobile communications, GSM, network;
a wideband code division multiple access, WCDMA, network;
a worldwide interoperability for microwave access, WiMax, network; or
a long term evolution, LTE, network.

3. The apparatus according to any of claims 1 or 2, wherein the estimate of the amount of the requested positioning data is indicated in the response in terms of at least one of
a data payload size; and
a number of individual objects.

4. The apparatus according to any of claims 1 or 2, wherein the estimate of the amount of the requested positioning data is indicated in the response in terms of a number of individual objects, the method further comprising estimating the payload data size for the indicated number of objects.

5. The apparatus according to one of claims 1 to 4, further comprising causing a presentation to a user (315) of at least one of:
the estimate of the amount of the requested positioning data;
a processed estimate of the amount of the requested positioning data;
an estimate of costs that would be caused by a download of data of the estimated amount;
an estimate of a transmission time that would be required for a download of data of the estimated amount;
an option to cancel the request;
an option to accept the request; and
an option to modify the request.

6. The apparatus according to one of claims 1 to 5, further comprising analyzing the estimate of the amount of the requested positioning data in the received response, and based on the analysis at least one of:
aborting the request;
accepting a selection of positioning data that has been requested in the request as a basis for a new request;
modifying a selection of positioning data that has been requested in the request as a basis for a new request; and
deleting data in a memory.

7. The apparatus according to one of claims 1 to 6, further comprising:
generating a new request for positioning data with an indication that the requested positioning data is to be provided, wherein the requested positioning data is selected based on at least one of a user input and results of an evaluation of the received estimate of the amount of the requested positioning data (316); and
causing a transmission of the new request (317).

8. An apparatus comprising at least one processor and at least one memory including computer program code; the at least one memory and the computer program code configured to cause the apparatus at least to perform:
receiving a request for positioning data, the request including an indication that an estimate of an amount of the requested positioning data is to be provided instead of the requested positioning data (411), wherein the indication is in the form of a flag in the request;
generating a response including an estimate of the amount of the requested positioning data instead of the requested positioning data (413); and
causing a transmission of the response (414)
wherein the positioning data comprises at least one of:
data on wireless local area network, WLAN, access points for supporting a WLAN based positioning; or
data on cells or base stations of a cellular network for supporting a cell based positioning.

9. The apparatus according to claim 8, wherein the cellular network is at least one of:
a global system for mobile communications, GSM, network;
a wideband code division multiple access, WCDMA, network;
a worldwide interoperability for microwave access, WiMax, network; or
a long term evolution, LTE, network.

10. The apparatus according to any of claims 8 or 9, wherein the estimated amount of the requested positioning data is indicated in terms of at least one of:
a data payload size; and
a number of individual objects.

11. The apparatus according to any of claims 8 to 10, wherein the estimated amount of the requested positioning data is obtained (412) by at least one of:
assembling the requested positioning data and determining the amount of the assembled positioning data;
querying objects belonging to the requested positioning data from a database and calculating the number of individual objects;
retrieving a stored estimate of a data payload size of the requested positioning data; and
retrieving at least one stored count of individual objects belonging to the requested positioning data.

12. The apparatus according to any of claims 1 to 7, wherein the apparatus is one of:
a chip (309); and
a mobile terminal (300).

13. The apparatus according to any of claims 8 to 11, wherein the apparatus is one of:
a chip (409); and
a server (400).

14. A system comprising at least:
an apparatus (300) according to one of claims 1 to 7; and
an apparatus (400) according to one of claims 8 to 11.

15. A computer program code causing an apparatus (300) to perform, when executed by a processor (301) of the apparatus (300):
generating a request for positioning data and including in the request an indication that an estimate of an amount of the requested positioning data is to be provided instead of the requested positioning data (311), wherein the indication is in the form of a flag in the request;
causing a transmission of the request (312); and
receiving a response including an estimate of the amount of the requested positioning data instead of the requested positioning data (313);
wherein the positioning data comprises at least one of:
data on wireless local area network, WLAN, access points for supporting a WLAN based positioning; or data on cells or base stations of a cellular network for supporting a cell based positioning.

16. A computer program code causing an apparatus (400) to perform, when executed by a processor (401) of the apparatus (400):
receiving a request for positioning data, the request including an indication that an estimate of an amount of the requested positioning data is to be provided instead of the requested positioning data (411), wherein the indication is in the form of a flag in the request;
generating a response including an estimate of the amount of the requested positioning data instead of the requested positioning data (413); and
causing a transmission of the response (414)
wherein the positioning data comprises at least one of:
data on wireless local area network, WLAN, access points for supporting a WLAN based positioning; or data on cells or base stations of a cellular network for supporting a cell based positioning.

## Patentansprüche

1. Vorrichtung, umfassend mindestens einen Prozessor und mindestens einen Speicher mit Computerprogrammcode; wobei der mindestens eine Speicher unc der Computerprogrammcode dazu konfiguriert sind, die Vorrichtung zu veranlassen, Folgendes durchzuführen:
Erzeugen einer Anfrage nach Positionierungsdaten und Einbeziehen einer Angabe in die Anfrage, dass eine Schätzung einer Menge der angefragten Positionierungsdaten anstelle der angefragten Positionierungsdaten (311) bereitzustellen ist, wobei die Angabe in der Anfrage in Form eines Merkers vorliegt;
Veranlassen einer Übermittlung der Anfrage (312); und
Empfangen einer Antwort mit einer Schätzung der Menge der angefragten Positionierungsdaten anstelle der angefragten Positionierungsdaten (313);
wobei die Positionierungsdaten mindestens eines des Folgenden umfassen:
Daten über Zugangspunkte eines drahtlosen lokalen Netzwerks (WLAN) zum Unterstützen einer WLAN-basierten Positionierung; oder
Daten über Zellen oder Basisstationen eines Mobilfunknetzes zum Unterstützen einer zellenbasierten Positionierung.

2. Vorrichtung nach Anspruch 1, wobei das Mobilfunknetz mindestens eines des Folgenden ist:
ein Global System for Mobile Communications (GSM)-Netz;
ein Wideband Code Division Multiple Access (WCDMA)-Netz;
ein Worldwide Interoperability for Microwave Access (WiMax)-Netz; oder
ein Long-Term Evolution (LTE)-Netz.

3. Vorrichtung nach einem der Ansprüche 1 oder 2, wobei die Schätzung der Menge der angefragten Positionierungsdaten in der Antwort als mindestens eines des Folgenden angegeben wird:
eine Datennutzlastgröße; und
eine Anzahl einzelner Objekte.

4. Vorrichtung nach einem der Ansprüche 1 oder 2, wobei die Schätzung der Menge der angefragten Positionierungsdaten in der Antwort als eine Anzahl einzelner Objekte angegeben wird, wobei das Verfahren ferner Schätzen der Nutzlastdatengröße für die angegebene Anzahl von Objekten umfasst.

5. Vorrichtung nach einem der Ansprüche 1 bis 4, ferner umfassend Veranlassen einer Präsentation von mindestens einem des Folgenden gegenüber einem Benutzer (315):
der Schätzung der Menge der angefragten Positionierungsdaten;
einer verarbeiteten Schätzung der Menge der angefragten Positionierungsdaten;
einer Schätzung der Kosten, die durch ein Herunterladen von Daten der geschätzten Menge verursacht würden;
einer Schätzung einer Übermittlungszeit, die für ein Herunterladen von Daten der geschätzten Menge erforderlich wäre;
einer Option, die Anfrage zu annullieren;
einer Option, die Anfrage anzunehmen; und
einer Option, die Anfrage zu ändern.

6. Vorrichtung nach einem der Ansprüche 1 bis 5, ferner umfassend Analysieren der Schätzung der Menge der angefragten Positionierungsdaten in der empfangenen Antwort und auf der Grundlage der Analyse mindestens eines des Folgenden:
Abbrechen der Anfrage;
Annehmen einer Auswahl von Positionierungsdaten, die in der Anfrage angefragt wurden, als Grundlage für eine neue Anfrage;
Ändern einer Auswahl von Positionierungsdaten, die in der Anfrage angefragt wurden, als Grundlage für eine neue Anfrage; und
Löschen von Daten in einem Speicher.

7. Vorrichtung nach einem der Ansprüche 1 bis 6, ferner umfassend:
Erzeugen einer neuen Anfrage nach Positionierungsdaten mit einer Angabe, dass die angefragten Positionierungsdaten bereitzustellen sind, wobei die angefragten Positionierungsdaten auf der Grundlage von mindestens einem von einer Benutzereingabe und Ergebnissen einer Bewertung der empfangenen Schätzung der Menge der angefragten Positionierungsdaten (316) ausgewählt werden; und
Veranlassen einer Übermittlung der neuen Anfrage (317).

8. Vorrichtung, umfassend mindestens einen Prozessor und mindestens einen Speicher mit Computerprogrammcode; wobei der mindestens eine Speicher und der Computerprogrammcode dazu konfiguriert sind, die Vorrichtung zu veranlassen, Folgendes durchzuführen:
Empfangen einer Anfrage nach Positionierungsdaten, wobei die Anfrage eine Angabe enthält, dass eine Schätzung einer Menge der angefragten Positionierungsdaten anstelle der angefragten Positionierungsdaten (411) bereitzustellen ist, wobei die Angabe in der Anfrage in Form eines Merkers vorliegt;
Erzeugen einer Antwort mit einer Schätzung der Menge der angefragten Positionierungsdaten anstelle der angefragten Positionierungsdaten (413); und
Veranlassen einer Übermittlung der Antwort (414),
wobei die Positionierungsdaten mindestens eines des Folgenden umfassen:
Daten über Zugangspunkte eines drahtlosen lokalen Netzwerks (WLAN) zum Unterstützen einer WLAN-basierten Positionierung; oder
Daten über Zellen oder Basisstationen eines Mobilfunknetzes zum Unterstützen einer zellenbasierten Positionierung.

9. Vorrichtung nach Anspruch 8, wobei das Mobilfunknetz mindestens eines des Folgenden ist:
ein Global System for Mobile Communications (GSM)-Netz;
ein Wideband Code Division Multiple Access (WCDMA)-Netz;
ein Worldwide Interoperability for Microwave Access (WiMax)-Netz; oder
ein Long-Term Evolution (LTE)-Netz.

10. Vorrichtung nach einem der Ansprüche 8 oder 9, wobei die geschätzte Menge der angefragten Positionierungsdaten als mindestens eines des Folgenden angegeben wird:
eine Datennutzlastgröße; und
eine Anzahl einzelner Objekte.

11. Vorrichtung nach einem der Ansprüche 8 bis 10, wobei die geschätzte Menge der angefragten Positionierungsdaten durch mindestens eines des Folgenden erhalten (412) wird:
Zusammenstellen der angefragten Positionierungsdaten und Bestimmen der Menge der zusammengestellten Positionierungsdaten;
Abfragen von Objekten, die zu den angefragten Positionierungsdaten gehören, aus einer Datenbank und Berechnen der Anzahl einzelner Objekte;
Abrufen einer gespeicherten Schätzung einer Datennutzlastgröße der angefragten Positionierungsdaten; und
Abrufen mindestens einer gespeicherten Zählung einzelner Objekte, die zu den angefragten Positionierungsdaten gehören.

12. Vorrichtung nach einem der Ansprüche 1 bis 7, wobei die Vorrichtung eines des Folgenden ist:
ein Chip (309); und
ein mobiles Endgerät (300).

13. Vorrichtung nach einem der Ansprüche 8 bis 11, wobei die Vorrichtung eines des Folgenden ist:
ein Chip (409); und
ein Server (400).

14. System, umfassend mindestens Folgendes:
eine Vorrichtung (300) nach einem der Ansprüche 1 bis 7; und
eine Vorrichtung (400) nach einem der Ansprüche 8 bis 11.

15. Computerprogrammcode, der eine Vorrichtung (300) bei Ausführung durch einen Prozessor (301) der Vorrichtung (300) dazu veranlasst, Folgendes durchzuführen:
Erzeugen einer Anfrage nach Positionierungsdaten und Einbeziehen einer Angabe in die Anfrage, dass eine Schätzung einer Menge der angefragten Positionierungsdaten anstelle der angefragten Positionierungsdaten (311) bereitzustellen ist, wobei die Angabe in der Anfrage in Form eines Merkers vorliegt;
Veranlassen einer Übermittlung der Anfrage (312); und
Empfangen einer Antwort mit einer Schätzung der Menge der angefragten Positionierungsdaten anstelle der angefragten Positionierungsdaten (313);
wobei die Positionierungsdaten mindestens eines des Folgenden umfassen:
Daten über Zugangspunkte eines drahtlosen lokalen Netzwerks (WLAN) zum Unterstützen einer WLAN-basierten Positionierung; oder
Daten über Zellen oder Basisstationen eines Mobilfunknetzes zum Unterstützen einer zellenbasierten Positionierung.

16. Computerprogrammcode, der eine Vorrichtung (400) bei Ausführung durch einen Prozessor (401) der Vorrichtung (400) dazu veranlasst, Folgendes durchzuführen:
Empfangen einer Anfrage nach Positionierungsdaten, wobei die Anfrage eine Angabe enthält, dass eine Schätzung einer Menge der angefragten Positionierungsdaten anstelle der angefragten Positionierungsdaten (411) bereitzustellen ist, wobei die Angabe in der Anfrage in Form eines Merkers vorliegt;
Erzeugen einer Antwort mit einer Schätzung der Menge der angefragten Positionierungsdaten anstelle der angefragten Positionierungsdaten (413); und
Veranlassen einer Übermittlung der Antwort (414),
wobei die Positionierungsdater mindestens eines des Folgenden umfassen:
Daten über Zugangspunkte eines drahtlosen lokalen Netzwerks (WLAN) zum Unterstützen einer WLAN-basierten Positionierung; oder
Daten über Zellen oder Basisstationen eines Mobilfunknetzes zum Unterstützen einer zellenbasierten Positionierung.

## Revendications

1. Appareil comprenant au moins un processeur et au moins une mémoire incluant un code de programme informatique ; la au moins une mémoire et le code de programme informatique étant configurés pour amener l'appareil au moins à effectuer :
la génération d'une demande pour des données de positionnement et l'inclusion dans la demande d'une indication qu'une estimation d'une quantité des données de positionnement demandées doit être fournie au lieu des données de positionnement demandées (311), dans lequel l'indication est sous la forme d'un drapeau dans la demande ;
le fait de provoquer une transmission de la demande (312) ; et
la réception d'une réponse incluant une estimation de la quantité des données de positionnement demandées au lieu des données de positionnement demandées (313) ;
dans lequel les données de positionnement comprennent au moins l'une parmi :
des données sur des points d'accès de réseau local sans fil, WLAN, pour prendre en charge un positionnement basé sur WLAN ; ou
des données sur des cellules ou des stations de base d'un réseau cellulaire pour prendre en charge un positionnement basé sur cellule.

2. Appareil selon la revendication 1, dans lequel le réseau cellulaire est au moins l'un parmi :
un réseau de système global de communications mobiles, GSM ;
un réseau d'accès multiple par répartition en code à large bande, WCDMA ;
un réseau d'interopérabilité mondiale pour l'accès micro-ondes, WiMax ; ou
un réseau d'évolution à long terme, LTE.

3. Appareil selon l'une quelconque des revendications 1 ou 2, dans lequel l'estimation de la quantité des données de positionnement demandées est indiquée dans la réponse en termes d'au moins l'un parmi
une taille de charge utile de données ; et
un nombre d'objets individuels.

4. Appareil selon l'une quelconque des revendications 1 ou 2, dans lequel l'estimation de la quantité des données de positionnement demandées est indiquée dans la réponse en termes d'un nombre d'objets individuels, le procédé comprenant en outre l'estimation de la taille de données de charge utile pour le nombre indiqué d'objets.

5. Appareil selon l'une des revendications 1 à 4, comprenant en outre le fait de provoquer une présentation à un utilisateur (315) d'au moins l'une parmi :
l'estimation de la quantité des données de positionnement demandées ;
une estimation traitée de la quantité des données de positionnement demandées ;
une estimation de coûts qui seraient provoqués par un téléchargement de données de la quantité estimée ;
une estimation d'un temps de transmission qui serait requis pour un téléchargement de données de la quantité estimée ;
une option pour annuler la demande ;
une option pour accepter la demande ; et
une option pour modifier la demande.

6. Appareil selon l'une des revendications 1 à 5, comprenant en outre l'analyse de l'estimation de la quantité des données de positionnement demandées dans la réponse reçue, et sur la base de l'analyse au moins l'un parmi :
l'abandon de la demande ;
l'acceptation d'une sélection de données de positionnement qui ont été demandées dans la demande comme base pour une nouvelle demande ;
la modification d'une sélection de données de positionnement qui ont été demandées dans la demande comme base pour une nouvelle demande ; et
la suppression de données dans une mémoire.

7. Appareil selon l'une des revendications 1 à 6, comprenant en outre :
la génération d'une nouvelle demande pour des données de positionnement avec une indication que les données de positionnement demandées doivent être fournies, dans lequel les données de positionnement demandées sont sélectionnées sur la base d'au moins l'un parmi une entrée d'utilisateur et des résultats d'une évaluation de l'estimation reçue de la quantité des données de positionnement demandées (316) ; et
le fait de provoquer une transmission de la nouvelle demande (317).

8. Appareil comprenant au moins un processeur et au moins une mémoire incluant un code de programme informatique ; la au moins une mémoire et le code de programme informatique étant configurés pour amener l'appareil au moins à effectuer :
la réception d'une demande pour des données de positionnement, la demande incluant une indication qu'une estimation d'une quantité des données de positionnement demandées doit être fournie au lieu des données de positionnement demandées (411), dans lequel l'indication est sous la forme d'un drapeau dans la demande ;
la génération d'une réponse incluant une estimation de la quantité des données de positionnement demandées au lieu des données de positionnement demandées (413) ; et
le fait de provoquer une transmission de la réponse (414)
dans lequel les données de positionnement comprennent au moins l'une parmi :
des données sur des points d'accès de réseau local sans fil, WLAN, pour prendre en charge un positionnement basé sur WLAN ; ou
des données sur des cellules ou des stations de base d'un réseau cellulaire pour prendre en charge un positionnement basé sur cellule.

9. Appareil selon la revendication 8, dans lequel le réseau cellulaire est au moins l'un parmi :
un réseau de système global de communications mobiles, GSM ;
un réseau d'accès multiple par répartition en code à large bande, WCDMA ;
un réseau d'interopérabilité mondiale pour l'accès micro-ondes, WiMax ; ou
un réseau d'évolution à long terme, LTE.

10. Appareil selon l'une quelconque des revendications 8 ou 9, dans lequel la quantité estimée des données de positionnement demandées est indiquée dans la réponse en termes d'au moins l'un parmi :
une taille de charge utile de données ; et
un nombre d'objets individuels.

11. Appareil selon l'une quelconque des revendications 8 à 10, dans lequel la quantité estimée des données de positionnement demandées est obtenue (412) par au moins l'un parmi :
l'assemblage des données de positionnement demandées et la détermination de la quantité des données de positionnement assemblées ;
l'interrogation d'objets appartenant aux données de positionnement demandées à partir d'une base de données et le calcul du nombre d'objets individuels ;
la récupération d'une estimation stockée d'une taille de charge utile de données des données de positionnement demandées ; et
la récupération d'au moins un compte stocké d'objets individuels appartenant aux données de positionnement demandées.

12. Appareil selon l'une quelconque des revendications 1 à 7, dans lequel l'appareil est l'un parmi :
une puce (309) ; et
un terminal mobile (300).

13. Appareil selon l'une quelconque des revendications 8 à 11, dans lequel l'appareil est l'un parmi :
une puce (409) ; et
un serveur (400).

14. Système comprenant au moins :
un appareil (300) selon L'une des revendications 1 à 7 ; et
un appareil (400) selon l'une des revendications 8 à 11.

15. Code de programme informatique amenant un appareil (300) à effectuer, lorsqu'il est exécuté par un processeur (301) de l'appareil (300) :
la génération d'une demande pour des données de positionnement et l'inclusion dans la demande d'une indication qu'une estimation d'une quantité des données de positionnement demandées doit être fournie au lieu des données de positionnement demandées (311), dans lequel l'indication est sous la forme d'un drapeau dans la demande ;
le fait de provoquer une transmission de la demande (312) ; et
la réception d'une réponse incluant une estimation de la quantité des données de positionnement demandées au lieu des données de positionnement demandées (313) ;
dans lequel les données de positionnement comprennent au moins l'une parmi :
des données sur des points d'accès de réseau local sans fil, WLAN, pour prendre en charge un positionnement basé sur WLAN ; ou
des données sur des cellules ou des stations de base d'un réseau cellulaire pour prendre en charge un positionnement basé sur cellule.

16. Code de programme informatique amenant un appareil (400) à effectuer, lorsqu'il est exécuté par un processeur (401) de l'appareil (400) :
la réception d'une demande pour des données de positionnement, la demande incluant une indication qu'une estimation d'une quantité des données de positionnement demandées doit être fournie au lieu des données de positionnement demandées (411), dans lequel l'indication est sous la forme d'un drapeau dans la demande ;
la génération d'une réponse incluant une estimation de la quantité des données de positionnement demandées au lieu des données de positionnement demandées (413) ; et
le fait de provoquer une transmission de la réponse (414) dans lequel les données de positionnement comprennent au moins l'une parmi :
des données sur des points d'accès de réseau local sans fil, WLAN, pour prendre en charge un positionnement basé sur WLAN ; ou
des données sur des cellules ou des stations de base d'un réseau cellulaire pour prendre en charge un positionnement basé sur cellule.
